# EUROPÄISCHE PATENTSCHRIFT

(11) **EP 1 622 711 B1**
(45) Veröffentlichungstag und Bekanntmachung des Hinweises auf die Patenterteilung: **04.04.2007**
(21) Anmeldenummer: 03795976.4
(22) Anmeldetag: 31.12.2003
(51) Int. Cl.: B01J 2/16, B01J 8/18

(54) **VERFAHREN UND VORRICHTUNG ZUM AUFBRINGEN VON FLÜSSIGKEITEN IN EINE FESTSTOFFSTRÖMUNG EINES STRAHLSCHICHTAPPARATES**
METHOD AND DEVICE FOR INTRODUCING LIQUIDS INTO A FLOW OF SOLIDS OF A SPOUTED BED APPARATUS
PROCEDE ET DISPOSITIF POUR APPLIQUER DES LIQUIDES SUR UN ECOULEMENT DES PARTICULES SOLIDES DANS UN DISPOSITIF A LIT FLUIDISE

(30) Priorität: 15.05.2003 DE 10322062
(43) Veröffentlichungstag der Anmeldung: 08.02.2006
(73) Patentinhaber: Glatt Ingenieurtechnik GmbH, D-99427 Weimar (DE)
(72) Erfinder: JACOB, Michael, 99427 Weimar (DE); RÜMPLER, Karlheinz, 99425 Weimar (DE); WASKOW, Mike, 99423 Weimar (DE)
(74) Vertreter: Maucher, Wolfgang
(86) Internationale Anmeldenummer: PCT/EP2003/014976
(87) Internationale Veröffentlichungsnummer: WO 2004/101132

(56) Entgegenhaltungen:
- EP-A- 1 125 629
- EP-A- 1 325 775
- WO-A-02/074427
- DE-A- 3 400 397
- US-A- 3 834 927
- US-A- 4 071 304
- US-A- 5 395 449

## Beschreibung

Die Erfindung betrifft ein Verfahren zum Aufbringen von Flüssigkeiten in eine Feststoffströmung eines Strahlschichtapparates mit den im Oberbegriff des Patentanspruches 1 genannten Merkmalen und eine dazugehörige Vorrichtung mit den im Oberbegriff des Patentanspruches 11 genannten Merkmalen.

Aus der DE 31 17 892 A1 ist ein Strahlschichtapparat zur Herstellung von Granulaten bekannt, bei dem eine Flüssigkeit in die Feststoffströmung des Strahlschichtgranulators eingebracht wird. Der Strahlschichtapparat weist einen runden Querschnitt auf, dessen unterer Teil konisch verengt ausgebildet ist. In den zentralen konischen Teil des Strahlschichtgranulators mündet ein Gaskanal, in dem eine Düse zum Eindüsen der Flüssigkeit angeordnet ist. Durch den Gaskanal wird ein entsprechendes Gas zur Aufrechterhaltung der Strahlschicht zugeführt. Das zentral zugeführte Gas reißt die über die Düse eingebrachte Flüssigkeit und ein Teil des im Strahlschichtgranulator befindlichen Materials mit, wobei ein Strahlkanal entsteht in dem die Materialteilchen mit der Flüssigkeit benetzt werden. Über den konusförmigen Boden wird das besprühte Material wieder dem Strahlkanal zugeführt, so dass es zu einem Partikelumlauf kommt. Nach Erreichen einer entsprechenden Granulatgröße werden diese aus dem Strahlschichtgranulator ausgetragen.

Nachteilig bei dieser Art von Strahlschichtgranulator ist, dass die Zuführung des Gases zur Erzeugung der Strahlschicht und die einzubringende Flüssigkeit an einer gemeinsamen Stelle im unteren Teil des Strahlschichtgranulators zugeführt wird. Eine gleichmäßige Benetzung von allen zu behandelnden Materialteilchen mit Flüssigkeit ist schwer bzw. nicht zu realisieren. Einige Materialteilchen werden mit zuviel und andere mit zuwenig Flüssigkeit besprüht, so dass ein Endprodukt mit gleicher Korngröße und gleichem Materialaufbau nicht erzielt wird. Außerdem sind diese Anlagen nur zur Granulation von geringen Materialdurchsätzen geeignet. Bei größeren Durchsätzen treten Probleme hinsichtlich der Erzeugung und der Aufrechterhaltung der Strahlschicht auf.

Vorbekannt ist durch die Schrift DE 100 04 939 C1 ein Strahlschichtapparat zur Fluidisierung und thermischen Behandlung von weitgehend beliebig geformter und in ihren Partikelabmessungen sowie Partikelmassen unterschiedlich bestehenden Materialien. Der Strahlschichtapparat zur Batch oder einer kontinuierlichen Prozessführung besteht aus einer im unterem Bereich des Strahlschichtapparats angeordneten Zuluftkammer in der das Fluidisierungsmittel, wie beispielsweise Luft, zugeführt wird. Das Fluidisierungsmittel wird mittels einer zwischen Zuluftkammer und Fluidisierungsbereich angeordneten steuerbaren Gasanströmeinrichtung dem Fluidisierungsbereich des Strahlschichtapparats zugeführt. Der Fluidisierungsbereich wird durch die im unteren Bereich angeordnete Gasanströmeinrichtung sowie durch eine Strahleinströmwand, einer der Strahleinströmwand gegenüberliegender Strahlrückstromwand sowie den Seitenwänden gebildet. Die Strahleinströmungswand und die Strahlrückstromwand sind gegenüber der Senkrechten geneigt, so dass sie einen Konus bilden. Dadurch entsteht oberhalb der Strahleinströmungswand und der Strahlrückstromwand ein erweiterter Querschnitt des Strahlschichtapparats, der als Expansionsbereich für das Fluidisierungsmittel dient und der mit einem Austrag für die Abluft versehen ist. Der Strahlschichtapparat kann dabei einseitig oder doppelseitig, das heißt mit einem doppelten Konus, ausgebildet sein. Durch die Anordnung der Strahleinströmungswand und der Strahlrückstromwand sowie durch die Zuführung des Fluidisierungsmittels durch die Gasanströmeinrichtung entsteht in dem Fluidisierungsbereich eine Art Feststoffrotation in der eine entsprechende Materialbehandlung erfolgt.

Ein Aufbringen von Flüssigkeiten in die Feststoffströmung ist mit dieser Art von Strahlapparaten nicht vorgesehen.

Aufgabe der Erfindung ist es, für einen Strahlschichtapparat ein Verfahren und eine dazugehörige Vorrichtung zu schaffen, mit dem bzw. mit der eine Flüssigkeit gezielt und einstellbar auf das Material in der Strahlschicht zur Herstellung von beschichteten Granulaten, zum Befeuchten von Materialteilchen und der Granulation und Agglomeration von unterschiedlichen Materialien für die verschiedensten Industriezweige aufgebracht werden kann, so dass ein Endprodukt mit annähernd gleicher Korngröße und gleichen Materialeigenschaften auch bei großen Materialdurchsätzen entsteht.

Diese Aufgabe wird erfindungsgemäß für das Verfahren durch die kennzeichnenden Merkmale des Patentanspruches 1 und für die Vorrichtung durch die kennzeichnenden Merkmale des Patentanspruches 11 gelöst.

Durch die Ausbildung wenigstens einer in axialer Richtung des Reaktionsraumes des Strahlschichtapparates liegenden kreisähnlichen Feststoffströmung bei der die zur Ausbildung der Feststoffströmung benötigte Zuluft über einen im unteren Bereich und in axialer Richtung des Reaktionsraumes liegenden Spalt zugeführt und die Flüssigkeit mittels einer oder mehreren Ein- und/oder Mehrstoffdüsen an einer oder mehreren Stellen in die Feststoffströmung eingebracht wird, können die Strömungsbedingungen im Bedüsungsbereich eingestellt werden, so dass die Flüssigkeit gezielt und einstellbar in die Feststoffströmung aufgebracht werden kann. Das dabei entstehende Endprodukt zeichnet sich durch annähernd gleiche Korngröße mit gleichen Materialeigenschaften aus. Durch das Aufsprühen von reinen Flüssigkeiten, Lösungen, Schmelzen oder dgl. durch ein oder mehrere Ein- und/oder Mehrstoffdüsen in die Feststoffströmung können unterschiedliche Endprodukte hergestellt werden.

Ein weiterer Vorteil der erfindungsgemäßen Lösung besteht darin, dass mit dem vorgeschlagenen Verfahren und der Vorrichtung das zu behandelnde Material verschiedenartigen Technologien wie Granulation, Agglomeration, Befeuchten und Beschichten unterzogen werden kann.

Weitere vorteilhafte Ausgestaltungen sind in den Unteransprüchen beschrieben, sie werden in der Beschreibung zusammen mit ihrer Wirkung erläutert.

Die Erfindung wird nachfolgend anhand eines Ausführungsbeispiels näher erläutert. In den dazugehörigen Zeichnungen zeigen:
- Fig. 1: einen erfindungsgemäßen Strahlschichtapparat im Schnitt,
- Fig. 2: eine Variante des erfindungsgemäßen Strahlschichtapparats in perspektivischer Darstellung,
- Fig. 3: eine weitere Variante des erfindungsgemäßen Strahlschichtapparates im Schnitt und
- Fig. 4: mehrere nebeneinander angeordnete Reaktionsräume des erfindungsgemäßen Strahlschichtapparates in perspektivischer Darstellung.

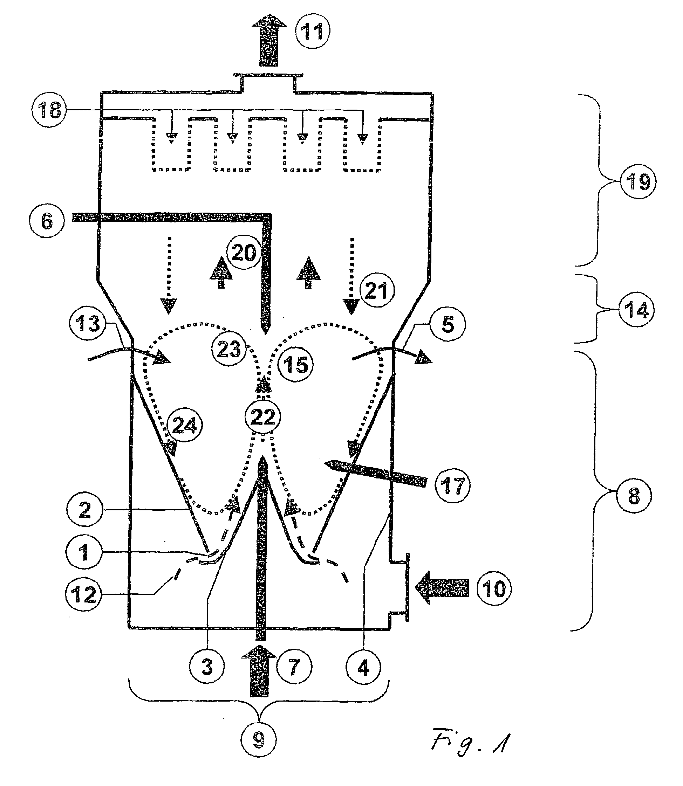

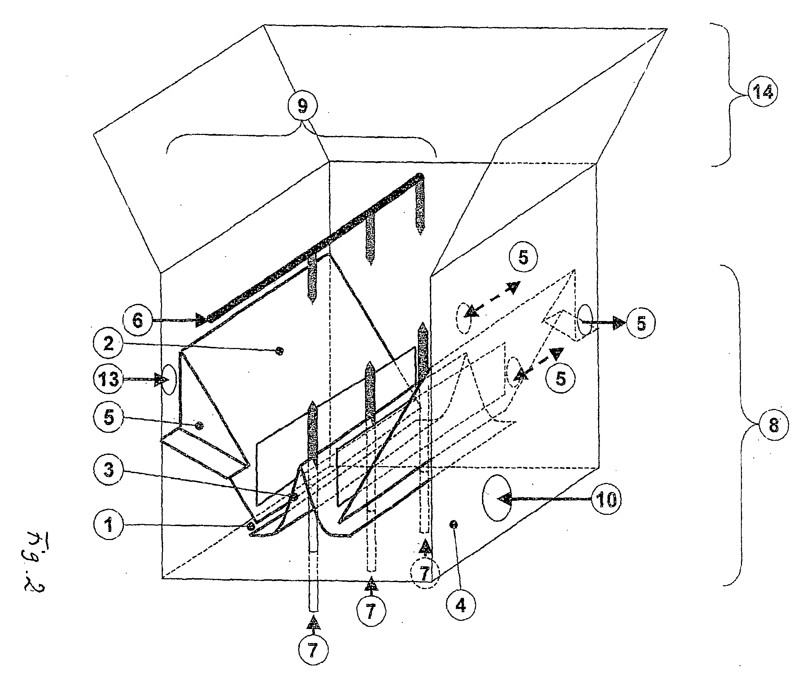

In der Figur 1 ist ein Strahlschichtapparat dargestellt, dessen Apparatequerschnitt 9 einen rechteckigen Querschnitt aufweist. In der Figur 2 ist ein Ausschnitt des in Figur 1 gezeigten Strahlschichtapparates perspektivisch dargestellt. Der grundsätzliche Aufbau des Strahlschichtapparates besteht aus einer Zuluftkammer 8, einem darüber angeordneten querschnittserweiternden Expansionsbereich 14 und einer Entstaubungsanlage 19. In dem Gehäuse 4 des Strahlapparates ist im unteren Teil der Zuluftkammer 8 eine Zufuhr für die Zuluft 10 angeordnet, während im oberen Bereich des Strahlschichtapparats ein Abzug für die Abluft 11 angeordnet ist. Die Entstaubungsanlage 19 ist mit einer an sich bekannten Filterabreinigung 18 versehen, die den abgeschiedenen Staub in den Reaktionsraum 26 des Strahlschichtapparates zurückführt.

Im Bereich der Zuluftkammer 8 sind im Gehäuse 4 des Strahlschichtapparates in axialer Richtung gesehen wenigstens eine Strahlrückstromwand 2 und eine Strahleinströmungswand 3 angeordnet, die den eigentlichen Reaktionsraum 26 des Strahlschichtapparates begrenzen. In der Figur 1 ist eine Vorzugsvariante der Ausbildung des Reaktionsraums 26 dargestellt, bei der der untere Bereich des Reaktionsraumes 26 in axialer Richtung durch zwei geneigt angeordnete Strahlrückströmungswände 2 begrenzt wird denen unter Bildung von zwei axial verlaufenden Spalten 1 jeweils eine geneigt angeordnete Strahleinströmungswand 3 zugeordnet ist, die im oberen Bereich miteinander verbunden sind. Der untere Bereich des Reaktionsraums 26 kann aber auch nur durch eine geneigt angeordnete Strahlrückströmungswand 2 und einer gegenüberliegenden geneigt angeordnete Strahleinströmungswand 3 unter Bildung eines axial durch den Reaktionsraum 26 verlaufenden Spaltes 1 zur Zuführung von Zuluft 10 gebildet werden. In dem Spalt 1 sind regelbare Verstelleinrichtungen zur Einstellung der Menge und der Geschwindigkeit der dem Reaktionsraum 26 zugetuhrten Luftströmung 12 angeordnet. Der Spalt 1 ist derart ausgebildet, dass die Luftströmung 12 der Zuluft 10 gegen den unteren Bereich der Strahleinströmwand 3 geleitet wird.

Die Zuführung des zu behandelnde Materials in dem Reaktionsraum 26 erfolgt über einen Materialeintritt 13, wobei sich unter Einwirkung der zugeführten Luftströmung 12 eine in axialer Richtung des Reaktionsraumes 26 liegende kreisähnliche Feststoffströmung 15 ausbildet. Der Materialeintritt 15 mündet vorzugsweise im Bereich einer nach unten gerichteten Strömung 24 der Feststoffströmung 15 in den Reaktionsraum 26. Über einen Feststoffaustrag 5 verlässt das Material den Reaktionsraum 26, wobei der Feststoffaustrag 5 im Bereich des Übergangs der Querströmung 23 zu der nach unten gerichteten Feststoffströmung 24 der Feststoffströmung 15 angeordnet ist.

Zur Einbringung von Flüssigkeit in die Feststoffströmung 15 münden an verschiedenen Stellen oberhalb des Spaltes 1 ein oder mehrere Düsen 6, 7, 17 in den Reaktionsraum 26. Dabei sind die Düsen 7 in Richtung der nach oben gerichteten Strömung 22 wirkend, die Düsen 6 entgegen der Richtung der nach oben gerichteten Strömung 22 wirkend und die Düsen 17 im Bereich der nach unten gerichteten Strömung 24 angeordnet. In axialer Richtung des Reaktionsraumes 26 münden mehrere nebeneinander angeordnete Düsen 6 und/oder 7 und/oder 17 in den Reaktionsraum 26 des Strahlschichtapparates.

Wie aus Figur 2 ersichtlich, ist im unteren Bereich des Reaktionsraums 26 zwischen der Strahlrückströmwand 2 und der Gehäusewand 3 ein axial verlaufendes Trennblech 16 angeordnet, dessen Unterkante beabstandet zur Strahlrückströmwand 2 angeordnet ist.

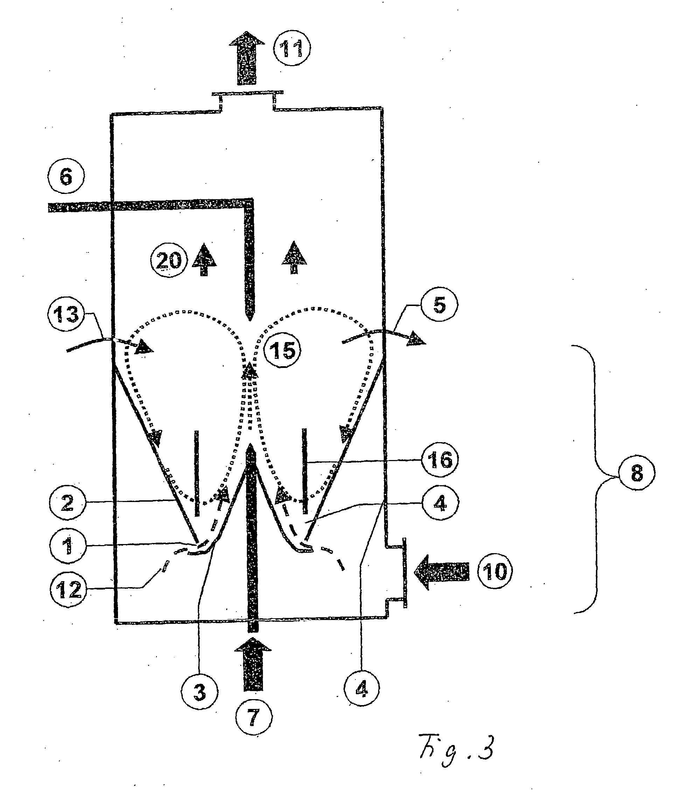

In der Figur 3 ist ein Strahlschichtapparat ohne integrierter Entstaubungsanlage 19 dargestellt. Dabei wird die staubbeladene Abluft 20 als Abluft 11 aus dem Strahlschichtapparat ausgetragen und in einer nachgeschalteten separaten nicht dargestellten Entstaubungsanlage entstaubt.

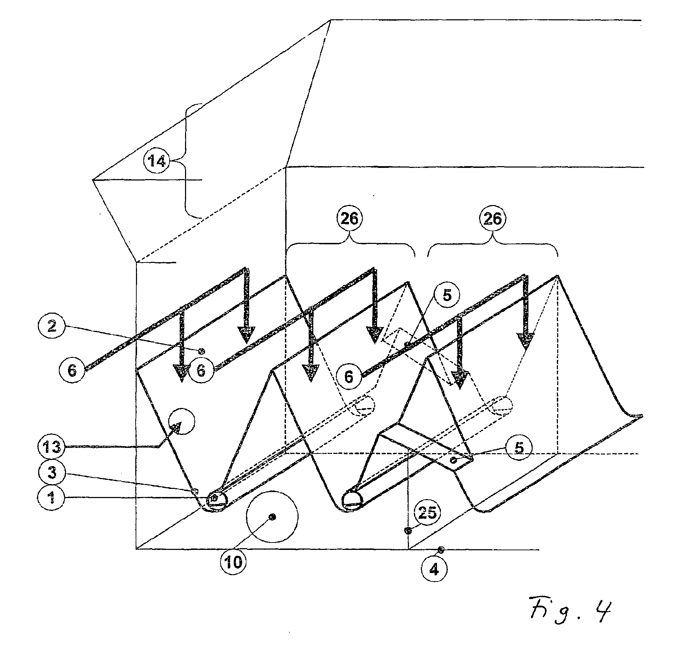

In der Figur 4 ist ein mehrstufiger Strahlschichtapparat dargestellt, der aus mehreren nebeneinander angeordneten Reaktionsräumen 26 gebildet wird. Dabei sind zwei nebeneinander angeordnete Reaktionsräume 26 über einen gemeinsamen Überlauf, der bei den ersten Reaktionsraum als Feststoffaustrag 5 und bei dem zweiten Reaktionsraum als Feststoffeintritt 13 ausgebildet ist, miteinander verbunden. Dabei kann der untere Bereich der Zuluftkammer 8 durch Anordnung von Trennwänden 25 in mehrere Segmente unterteilt werden, die ein oder mehrere Reaktionsräume 26 umfassen. In den dabei unter den Reaktionsräumen 26 entstehenden Räumen kann Zuluft 10 in unterschiedlicher Menge, Temperatur und Strömungsgeschwindigkeit zugeführt werden.

Die Wirkung des erfindungsgemäßen Strahlschichtapparates wird anhand des nachfolgend erfindungsgemäßen Verfahrens näher erläutert.

Gemäß dem erfindungsgemäßen Verfahren zum Aufbringen von Flüssigkeiten in eine Feststoffströmung eines Strahlschichtapparates zur Herstellung von beschichteten Granulaten, zum Befeuchten von Materialteilchen und der Granulation und Agglomeration von unterschiedlichen Materialien für die verschiedensten Industriezweige wird wenigstens eine in axialer Richtung des Reaktionsraumes 26 liegende kreisähnliche Feststoffströmung 15 erzeugt, in die eine Flüssigkeit eingedüst wird. Dabei wird die Feststoffströmung 15 mit einer nach oben gerichtete Strömung 22 mit hoher Strömungsgeschwindigkeit, mit einer Querströmung 23 mit geringerer Strömungsgeschwindigkeit und mit einer nach unten gerichtete Strömung 24, die eine geringere Strömungsgeschwindigkeit als die Querströmung 23 besitzt, durch Zuführen von Zuluft 10 über einen im unteren Bereich und in axialer Richtung des Reaktionsraumes liegenden Spalt 1 und durch die eingedüste Flüssigkeit gebildet. Die nach unten gerichtete Feststoffströmung 24 im Reaktionsraum 26 wird durch Schwerkraftwirkung erzeugt.

Das zu behandelnde Material wird durch die kreisähnliche Feststoffströmung 15 durch den langgestreckten Reaktionsraum 26 vom Materialeintritt 13 zu dem Feststoffaustrag 5 transportiert, wobei das Material über die in axialer Richtung des Reaktionsraumes 26 hintereinander angeordneten Düsen 6 und/oder 7 und/oder 17 mit Flüssigkeit besprüht wird. Die Flüssigkeit wird dabei mittels Ein- und/oder Mehrstoffdüsen 6, 7, 17 an einer oder mehreren Stellen in die Feststoffströmung 15 eingebracht. Entsprechend dem herzustellenden Endprodukt wird eine reine Flüssigkeit, Lösungen, Schmelzen oder dgl. in die Feststoffströmung 15 aufgesprüht. Durch entsprechend eingestellte Strömungsverhältnisse im Reaktionsraum 26 und durch die Zuführung der Flüssigkeiten in die Feststoffströmung 15 wird entsprechend dem herzustellenden Endprodukt ein Befeuchten, Beschichten oder eine Granulation oder Agglomeration des Materials vorgenommen.

Zur Ausbildung der Feststoffströmung 15 mit einem gewünschten Strömungsprofil ist die Menge und die Strömungsgeschwindigkeit der dem Reaktionsraum 26 zugeführten Zuluft 10 und/oder der Luftströmung 12 regelbar einstellbar, wobei vorteilhafter Weise im Reaktionsraum 26 zwei gegenläufig kreisähnliche Feststoffströmungen 15 erzeugt werden. Unterstützt wird die Bildung der Feststoffströmung 15 durch das Einsprühen der Flüssigkeit und durch die angeordneten Trennbleche 16. Durch den entstehenden Spalt zwischen dem Trennblech 16 und der Strahlrückströmwand 2 wird das Material der nach unten gerichteten Strömung 24 direkt der über den Spalt 1 zugeführten Luftströmung 12 aufgegeben, wodurch auch gleichzeitig eine Stabilisierung der nach oben gerichteten Strömung 22 erreicht wird. Außerdem wird durch das Trennblech 16 ein unerwünschtes Überströmen des Materials zwischen der nach unten gerichteten Strömung 24 und der nach oben gerichteten Strömung 22 insbesonders bei einer hohen Materialbeaufschlagung der Feststoffströmung 15 vermieden.

Die Materialzuführung in den Reaktionsraum 26 erfolgt über den Materialeintritt 13 im Bereich der nach unten gerichteten Feststoffströmung 24, während der Materialaustrag des Fertigproduktes aus dem Reaktionsraum 26 oder ein Materialtransport in einen weiteren nachgeschalteten Reaktionsraum 26 im Bereich des Übergangs der Querströmung 23 zu der nach unten gerichteten Feststoffströmung 24 erfolgt.

Zum Schutz der Umwelt oder nachfolgender Ausrüstungen vor einer Kontamination durch das zu behandelnde Material ist die Entstaubungsanlage 19 ein integrierter Bestandteil des Strahlschichtapparates. Die Entstaubung der staubbeladenen Abluft 20 erfolgt beispielsweise in einem Schlauch- oder Patronenfilter, während der abgeschiedene Staub 21 der Feststoffströmung 15 wieder zugeführt wird und damit an dem weiteren Behandlungsprozess teilnimmt.

### Zusammenfassend lässt sich folgendes feststellen:

Die Erfindung betrifft ein Verfahren zum Aufbringen von Flüssigkeiten in eine Feststoffströmung eines Strahlschichtapparates mit den im Oberbegriff des Patentanspruches 1 genannten Merkmalen und eine dazugehörige Vorrichtung mit den im Oberbegriff des Patentanspruches 11 genannten Merkmalen.

Aufgabe der Erfindung ist es, für einen Strahlschichtapparat ein Verfahren und eine dazugehörige Vorrichtung zu schaffen, mit dem bzw. mit der eine Flüssigkeit gezielt und einstellbar auf das Material in der Strahlschicht zur Herstellung von beschichteten Granulaten, zum Befeuchten von Materialteilchen und der Granulation und Agglomeration von unterschiedlichen Materialien für die verschiedensten Industriezweige aufgebracht wird, so dass ein Endprodukt mit annähernd gleicher Korngröße und gleichen Materialeigenschaften auch bei großen Materialdurchsätzen entsteht.

Erfindungsgemäß wird das durch die Ausbildung wenigstens einer in axialer Richtung des Reaktionsraumes des Strahlschichtapparates liegenden kreisähnlichen Feststoffströmung erreicht, bei der die zur Ausbildung der Feststoffströmung benötigte Zuluft über einen im unteren Bereich und in axialer Richtung des Reaktionsraumes liegenden Spalt zugeführt und die Flüssigkeit mittels einer oder mehreren Ein- und/oder Mehrstoffdüsen an einer oder mehreren Stellen in die Feststoffströmung eingebracht wird. Dadurch können die Strömungsbedingungen im Bedüsungsbereich eingestellt werden, so dass die Flüssigkeit gezielt und einstellbar in die Feststoffströmung aufgebracht werden kann. Das dabei entstehende Endprodukt zeichnet sich durch annähernd gleiche Korngröße mit gleichen Materialeigenschaften aus. Durch das Aufsprühen von reinen Flüssigkeiten, Lösungen, Schmelzen oder dgl. durch ein oder mehrere Ein- und/oder Mehrstoffdüsen in die Feststoffströmung können unterschiedliche Endprodukte hergestellt werden.

Verfahren und Vorrichtung zum Aufbringen von Flüssigkeiten in eine Feststoffströmung eines Strahlschichtapparates

### Aufstellung der verwendeten Bezugszeichen

- 1: Spalt
- 2: Strahlrückströmungswand
- 3: Strahleinströmungswand
- 4: Gehäuse
- 5: Feststoffaustrag
- 6: Düse
- 7: Düse
- 8: Zuluftkammer
- 9: Apparatequerschnitt
- 10: zuluft
- 11: Abluft
- 12: Luftströmung
- 13: Materialeintritt
- 14: Expansionsbereich
- 15: Feststoffströmung
- 16: Trennblech
- 17: Düse
- 18: Filterabreinigung
- 19: Entstaubungsanlage
- 20: staubbeladene Abluft
- 21: abgeschiedener Staub
- 22: nach oben gerichtete Strömung
- 23: Querströmung
- 24: nach unten gerichtete Strömung
- 25: Trennwände
- 26: Reaktionsraum

## Patentansprüche

1. Verfahren zum Aufbringen von Flüssigkeiten in eine Feststoffströmung eines Strahlschichtapparates, bei dem die Flüssigkeit durch eine Düsen in die Strahlschicht eingebracht wird, **dadurch gekennzeichnet, dass**
- in einem mit rechteckigem Querschnitt versehenen Reaktionsraum (26) eines Strahlschichtapparates wenigstens eine in axialer Richtung des Reaktionsraumes (26) liegende kreisähnliche Feststoffströmung (15) erzeugt wird,
- in die Feststoffströmung (15) eine Flüssigkeit eingedüst wird,
- die Feststoffströmung (15) mit einer nach oben gerichteten Strömung (22) mit hoher Strömungsgeschwindigkeit, mit einer Querströmung (23) mit geringerer Strömungsgeschwindigkeit und mit einer nach unten gerichteten Strömung (24), die eine geringere Strömungsgeschwindigkeit als die Querströmung (23) besitzt, durch Zuführen von Zuluft (10) über einen im unteren Bereich und in axialer Richtung des Reaktionsraumes liegenden Spalt (1) und durch die eingedüste Flüssigkeit gebildet wird.

2. Verfahren nach Anspruch 1, **dadurch gekennzeichnet, dass** mittels Ein- und/oder Mehrstoffdüsen (6, 7, 17) die Flüssigkeit an einer oder mehreren Stellen in die Feststoffströmung (15) eingebracht wird.

3. Verfahren nach Anspruch 1 und 2, **dadurch gekennzeichnet, dass** die Menge und die Strömungsgeschwindigkeit der dem Reaktionsraum (26) zugeführten Zuluft (10) und/oder der Luftströmung (12) regelbar einstellbar sind.

4. Verfahren nach einem oder mehreren vorhergehenden Ansprüchen, **dadurch gekennzeichnet, dass** die nach unten gerichtete Feststoffströmung (24) im Reaktionsraum (26) durch Schwerkraftwirkung erzeugt wird.

5. Verfahren nach einem oder mehreren vorhergehenden Ansprüchen, **dadurch gekennzeichnet, dass** bei mehreren Reaktionsräumen (26) der Materialtransport zu den jeweiligen Reaktionsräumen (26) durch jeweils einen Materialüberlauf erfolgt.

6. Verfahren nach einem oder mehreren vorhergehenden Ansprüchen, **dadurch gekennzeichnet, dass** der in einer Entstaubungsanlage (19) abgeschiedene Materialstaub (21) der Feststoffströmung (15) wieder zugeführt wird.

7. Verfahren nach einem oder mehreren vorhergehenden Ansprüchen, **dadurch gekennzeichnet, dass** eine Materialzuführung über einen Materialeintritt (13) in den Reaktionsraum (26) im Bereich der nach unten gerichteten Feststoffströmung (24) erfolgt.

8. Verfahren nach einem oder mehreren vorhergehenden Ansprüchen, **dadurch gekennzeichnet, dass** ein Materialaustrag des Fertigproduktes aus dem Reaktionsraum (26) oder ein Materialtransport in einen weiteren nachgeschalteten Reaktionsraum (26) im Bereich des Übergangs der Querströmung (23) zu der nach unten gerichteten Feststoffströmung (24) erfolgt.

9. Verfahren nach einem oder mehreren vorhergehenden Ansprüchen, **dadurch gekennzeichnet, dass** im Reaktionsraum (26) zwei gegenläufig kreisähnliche Feststoffströmungen (15) erzeugt werden.

10. Verfahren nach einem oder mehreren vorhergehenden Ansprüchen, **dadurch gekennzeichnet, dass** reine Flüssigkeiten, Lösungen, Schmelzen oder dergleichen in die Feststoffströmung (15) aufgesprüht werden.

11. Vorrichtung zum Aufbringen von Flüssigkeiten in eine Feststoffströmung eines Strahlschichtapparates, bei der eine Sprühdüse in den Reaktionsraum des Strahlschichtapparates mündet, **dadurch gekennzeichnet, dass** der untere Bereich des mit einem rechteckigem Querschnitt versehenen Reaktionsraumes (26) eines Strahlschichtapparates in axialer Richtung durch wenigstens eine geneigt angeordnete Strahlrückströmungswand (2) und einer gegenüberliegenden geneigt angeordnete Strahleinströmungswand (3) unter Bildung eines axial durch den Reaktionsraum (26) verlaufenden Spaltes (1) zur Zuführung von Zuluft (10) begrenzt wird und wenigstens eine Düse (6), (7), (17) zur Einbringung von Flüssigkeit oberhalb des Spaltes (1) in den Reaktionsraum (26) mündet.

12. Vorrichtung nach Anspruch 11, **dadurch gekennzeichnet, dass** der untere Bereich des Reaktionsraumes (26) in axialer Richtung durch zwei geneigt angeordnete Strahlrückströmungswände (2) begrenzt wird, denen unter Bildung von zwei axial verlaufenden Spalten (1) jeweils eine geneigt angeordnete Strahleinströmungswand (3) zugeordnet ist, die im oberen Bereich miteinander verbunden sind.

13. Vorrichtung nach Anspruch 11 und 12, **dadurch gekennzeichnet, dass** in dem Spalt (1) regelbare Verstelleinrichtungen zur Einstellung der Menge und der Geschwindigkeit der dem Reaktionsraum (26) zugeführten Luftströmung (12) angeordnet sind.

14. Vorrichtung nach einem oder mehreren vorhergehenden Ansprüchen, **dadurch gekennzeichnet, dass** der Spalt (1) derart ausgebildet ist, dass die Luftströmung (12) der Zuluft (10) gegen den unteren Bereich der Strahleinströmwand (3) geleitet wird.

15. Vorrichtung nach einem oder mehreren vorhergehenden Ansprüchen, **dadurch gekennzeichnet, dass** ein oder mehrere Düsen (6, 7, 17) zur Einbringung von Flüssigkeit in die Feststoffströmung (15) an verschiedenen Stellen oberhalb des Spaltes (1) in den Reaktionsraum (26) münden.

16. Vorrichtung nach einem oder mehreren vorhergehenden Ansprüchen, **dadurch gekennzeichnet, dass** der Strahlschichtapparat aus eine oder mehreren nebeneinander angeordneten Reaktionsräumen (26) gebildet wird.

17. Vorrichtung nach einem oder mehreren vorhergehenden Ansprüchen, **dadurch gekennzeichnet, dass** zwei nebeneinander angeordnete Reaktionsräume (26) über einen gemeinsamen Überlauf, der bei den ersten Reaktionsraum als Feststoffaustrag (5) und bei dem zweiten Reaktionsraum als Feststoffeintritt (13) ausgebildet ist, miteinander verbunden sind.

18. Vorrichtung nach einem oder mehreren vorhergehenden Ansprüchen, **dadurch gekennzeichnet, dass** im unteren Bereich des Reaktionsraums (26) zwischen der Strahlrückströmwand (2) und der Gehäusewand (3) ein axial verlaufendes Trennblech (16) angeordnet ist, dessen Unterkante beabstandet zur Strahlrückströmwand (2) angeordnet ist.

19. Vorrichtung nach einem oder mehreren vorhergehenden Ansprüchen, **dadurch gekennzeichnet, dass** der obere Bereich des Reaktionsraums (26) als Abscheideraum (19) ausgebildet ist.

20. Vorrichtung nach einem oder mehreren vorhergehenden Ansprüchen, **dadurch gekennzeichnet, dass** ein Materialeintritt (15) im Bereich einer nach unten gerichteten Feststoffströmung (24) in den Reaktionsraum (26) mündet.

21. Vorrichtung nach einem oder mehreren vorhergehenden Ansprüchen, **dadurch gekennzeichnet, dass** ein Feststoffaustrag (5) im Bereich des Übergangs der Querströmung (23) zu der nach unten gerichteten Feststoffströmung (24) angeordnet ist.

22. Vorrichtung nach einem oder mehreren vorhergehenden Ansprüchen, **dadurch gekennzeichnet, dass** in axialer Richtung mehrere nebeneinander angeordnete Düsen (6) und/oder (7) und/oder (17) in den Reaktionsraum (26) des Strahlschichtapparates einmünden.

23. Vorrichtung nach einem oder mehreren vorhergehenden Ansprüchen, **dadurch gekennzeichnet, dass** die Düsen (7) in Richtung einer nach oben gerichteten Strömung (22) wirkend, die Düsen (6) entgegen der Richtung einer nach oben gerichteten Strömung (22) wirkend und die Düsen (17) im Bereich der nach unten gerichteten Strömung (24) angeordnet sind.

## Claims

1. Process for introducing fluids into a solids flow of a fluidised bed apparatus, wherein the fluid is introduced into the fluidised bed through a nozzle, **characterised in that**:
- in a reaction space (26) of a fluidised bed apparatus provided with a rectangular cross section, at least one circular solids flow (15) in the axial direction of the reaction space (26) is generated,
- a fluid is injected into the solids flow (15),
- the solids flow (15) is formed with an upwardly directed flow (22) having a high flow rate, with a cross flow (23) having a lower flow rate, and with a downwardly directed flow (24), which has a lower flow rate than the cross flow (23), by the supply of supply air (10) through a gap (1) located in the lower region and in the axial direction of the reaction space and by the injected fluid.

2. Process according to claim 1, **characterised in that** the fluid is introduced into the solids flow (15) by means of single- and/or multiple-component nozzles (6, 7, 17) at one or more positions.

3. Process according to claim 1 and 2, **characterised in that** the amount and the flow rate of the supply air (10) supplied to the reaction space (26) and/or the air flow (12) can be set to be adjustable.

4. Process according to one or more of the preceding claims, **characterised in that** the downwardly directed solids flow (24) is generated in the reaction space (26) through the effect of gravity.

5. Process according to one or more of the preceding claims, **characterised in that**, where there are several reaction spaces (26), the material is transported to the appropriate reaction spaces (26) through corresponding material overflow ports.

6. Process according to one or more of the preceding claims, **characterised in that** the material dust (21) separated off in a dedusting system (19) is fed back to the solids flow (15).

7. Process according to one or more of the preceding claims, **characterised in that** material is supplied through a material inlet (13) into the reaction space (26) in the region of the downwardly directed solids flow (24).

8. Process according to one or more of the preceding claims, **characterised in that** the final product is discharged from the reaction space (26) or material is transported into another downstream reaction space (26) in the region of the transition of the cross flow (23) to the downwardly directed solids flow (24).

9. Process according to one ore more of the preceding claims, **characterised in that** two opposing circular solids flows (15) are generated in the reaction space (26).

10. Process according to one or more of the preceding claims, **characterised in that** pure fluids, solutions, molten masses or the like are sprayed into the solids flow (15).

11. Apparatus for introducing fluids into a solids flow of a fluidised bed apparatus, in which a spray nozzle opens into the reaction space of the fluidised bed apparatus **characterised in that** the lower region of the reaction space (26) for the fluidised bed apparatus, which is provided with a rectangular cross section, is bounded in the axial direction by at least one inclined stream backflow wall (2) and an oppositely inclined stream inflow wall (3), forming a gap (1) extending axially through the reaction space (26) for supplying supply air (10), and at least one nozzle (6), (7), (17) for introducing fluid above the gap (1) opens into the reaction space (26).

12. Apparatus according to claim 11, **characterised in that** the lower region of the reaction space (26) is bounded in the axial direction by two inclined stream backflow walls (2), which are each associated with an inclined stream inflow wall (3), forming two axial gaps (1), said inflow walls being joined together in an upper region.

13. Apparatus according to claim 11 and 12, wherein controllable regulating devices for setting the amount and the rate of the air flow (12) supplied to the reaction space (26) are arranged in the gap (1).

14. Apparatus according to one or more of the preceding claims, **characterised in that** the gap (1) is formed such that the air flow (12) of the supply air (10) is guided towards the lower region of the stream inflow wall (3).

15. Apparatus according to one or more of the preceding claims, **characterised in that** one or more nozzles (6, 7, 17) for introducing fluid into the solids flow (15) open into the reaction space (26) at various positions above the gap (1).

16. Apparatus according to one or more of the preceding claims, **characterised in that** the fluidised bed apparatus is formed from one or more adjacent reaction spaces (26).

17. Apparatus according to one or more of the preceding claims, **characterised in that** two adjacent reaction spaces (26) are connected to each other via a common overflow port, which is formed as a solids outlet (5) for the first reaction space and as a solids inlet (13) for the second reaction space.

18. Apparatus according to one or more of the preceding claims, **characterised in that** there is an axial separating plate (16), whose lower edge is arranged at a distance to the stream backflow wall (2), in the lower region of the reaction space (26) between the stream backflow wall (2) and the housing wall (3).

19. Apparatus according to one or more of the preceding claims, **characterised in that** the upper region of the reaction space (26) is formed as a separating space (19).

20. Apparatus according to one or more of the preceding claims, **characterised in that** a material inlet (15) opens into the reaction space (26) in the region of a downwardly directed solids flow (24).

21. Apparatus according to one or more of the preceding claims, **characterised in that** a solids outlet (5) is arranged in the region of the transition of the cross flow (23) to the downwardly directed solids flow (24).

22. Apparatus according to one or more of the preceding claims, **characterised in that** in the axial direction several adjacent nozzles (6) and/or (7) and/or (17) open into the reaction space (26) of the fluidised bed apparatus.

23. Apparatus according to one or more of the preceding claims, **characterised in that** the nozzles (7) act in the direction of an upwardly directed flow (22), the nozzles (6) act counter to the direction of an upwardly directed flow (22), and the nozzles (17) are arranged in the region of the downwardly directed flow (24).

## Revendications

1. Procédé pour appliquer des liquides dans un écoulement de solides d'un dispositif à lit fluidisé dans lequel le liquide est introduit dans le lit fluidisé par une buse, **caractérisé par le fait que**
- dans une chambre de réaction (26) munie d'une section rectangulaire d'un dispositif à lit fluidisé, au moins un écoulement de solides (15) quasi circulaire est généré en direction axiale de la chambre de réaction (26),
- un liquide est injecté dans l'écoulement de solides (15),
- l'écoulement de solides (15), comprenant un écoulement (22) dirigé vers le haut à grande vitesse d'écoulement, un écoulement transversal (23) à vitesse d'écoulement plus faible et un écoulement (24) dirigé vers le bas qui possède une vitesse d'écoulement plus faible que l'écoulement transversal (23), est formé par introduction d'air amené (10) par une fente (1) située dans la partie basse et en direction axiale de la chambre de réaction et par le liquide injecté.

2. Procédé selon la revendication 1, **caractérisé par le fait que** le liquide est introduit dans l'écoulement de solides (15) à un ou plusieurs endroits au moyen de buses mono- ou multifluides (6, 7, 17).

3. Procédé selon les revendications 1 et 2, **caractérisé par le fait que** la quantité et la vitesse d'écoulement de l'air amené (10) introduit dans la chambre de réaction (26) et/ou le courant d'air (12) sont réglables.

4. Procédé selon l'une ou plusieurs des revendications précédentes, **caractérisé par le fait que** l'écoulement de solides (24) dirigé vers le bas dans la chambre de réaction (26) est généré par action de la gravité.

5. Procédé selon l'une ou plusieurs des revendications précédentes, **caractérisé par le fait que** s'il y a plusieurs chambres de réaction (26), le transport de matière vers les chambres de réaction (26) respectives est réalisé chaque fois par un déversoir de matière.

6. Procédé selon l'une ou plusieurs des revendications précédentes, **caractérisé par le fait que** la poussière de matière (21) extraite dans une installation de dépoussiérage (19) est à nouveau introduite ou amenée dans l'écoulement de solides (15).

7. Procédé selon l'une ou plusieurs des revendications précédentes, **caractérisé par le fait qu'**une amenée de matière se fait par une entrée de matière (13) dans la chambre de réaction (26) au niveau de l'écoulement de solides (24) dirigé vers le bas.

8. Procédé selon l'une ou plusieurs des revendications précédentes, **caractérisé par le fait qu'**une sortie de matière du produit fini de la chambre de réaction (26) ou un transport de matière dans une autre chambre de réaction (26) placée à la suite se fait au niveau de la transition de l'écoulement transversal (23) à l'écoulement de solides (24) dirigé vers le bas.

9. Procédé selon l'une ou plusieurs des revendications précédentes, **caractérisé par le fait que** deux écoulements de solides quasi circulaires tournant en sens contraires sont générés dans la chambre de réaction (26).

10. Procédé selon l'une ou plusieurs des revendications précédentes, **caractérisé par le fait que** des liquides, solutions, matières fondues ou analogues purs sont vaporisés dans l'écoulement de solides (15).

11. Dispositif pour appliquer des liquides dans un écoulement de solides d'un dispositif à lit fluidisé, dans lequel une buse de pulvérisation débouche dans la chambre de réaction du dispositif à lit fluidisé, **caractérisé par le fait que** la partie inférieure de la chambre de réaction (26) munie d'une section rectangulaire d'un dispositif à lit fluidisé est limitée en direction axiale par au moins une paroi de retour de jet (2) inclinée et une paroi d'arrivée de jet (3) inclinée opposée qui forment une fente (1) s'étendant axialement à travers la chambre de réaction (26) pour l'introduction d'air amené (10), et qu'au moins une buse (6), (7), (17) pour l'introduction de liquide débouche au-dessus de la fente (1) dans la chambre de réaction (26).

12. Dispositif selon la revendication 11, **caractérisé par le fait que** la partie inférieure de la chambre de réaction (26) est limitée en direction axiale par deux parois de retour de jet (2) inclinées auxquelles sont associées, en formant deux fentes (1) s'étendant axialement, deux parois d'arrivée de jet (3) inclinées qui sont reliées ensemble dans la partie supérieure.

13. Dispositif selon les revendications 11 et 12, **caractérisé par le fait que** des dispositifs de réglage réglables permettent de régler la quantité et la vitesse du courant d'air (12) introduit dans la chambre de réaction (26) sont disposés dans la fente (1).

14. Dispositif selon l'une ou plusieurs des revendications précédentes, **caractérisé par le fait que** la fente (1) est réalisée de telle manière que le courant d'air (12) de l'air amené (10) est guidé contre la partie inférieure de la paroi d'arrivée de jet (3).

15. Dispositif selon l'une ou plusieurs des revendications précédentes, **caractérisé par le fait qu'**une ou plusieurs buses (6, 7, 17) pour l'introduction de liquide dans l'écoulement de solides (15) débouchent à différents endroits au-dessus de la fente (1).

16. Dispositif selon l'une ou plusieurs des revendications précédentes, **caractérisé par le fait que** le dispositif à lit fluidisé est formé d'une ou plusieurs chambres de réaction (26) disposées les unes à côté des autres.

17. Dispositif selon l'une ou plusieurs des revendications précédentes, **caractérisé par le fait que** deux chambres de réaction (26) disposées l'une à côté de l'autre sont reliées ensemble par un déversoir commun qui, sur la première chambre de réaction, est réalisé sous forme de sortie de solides (5) et, sur la deuxième chambre de réaction, sous forme d'entrée de solides (13).

18. Dispositif selon l'une ou plusieurs des revendications précédentes, **caractérisé par le fait qu'**une tôle de séparation (16) s'étendant axialement est disposée dans la partie inférieure de la chambre de réaction (26) entre la paroi de retour de jet (2) et la paroi de boîtier (3), le bord inférieur de ladite tôle étant disposé à distance de la paroi de retour de jet (2).

19. Dispositif selon l'une ou plusieurs des revendications précédentes, **caractérisé par le fait que** la partie supérieure de la chambre de réaction (26) est réalisée sous forme de chambre de séparation (19).

20. Dispositif selon l'une ou plusieurs des revendications précédentes, **caractérisé par le fait qu'**une entrée de matière (15) débouche dans la chambre de réaction (26) au niveau d'un écoulement de solides (24) dirigé vers le bas.

21. Dispositif selon l'une ou plusieurs des revendications précédentes, **caractérisé par le fait qu'**une sortie de matière (5) est disposée au niveau de la transition de l'écoulement transversal (23) à l'écoulement de solides (24) dirigé vers le bas.

22. Dispositif selon l'une ou plusieurs des revendications précédentes, **caractérisé par le fait que** plusieurs buses (6) et/ou (7) et/ou (17) disposées les unes à côté des autres en direction axiale débouchent dans la chambre de réaction (26) du dispositif à lit fluidisé.

23. Dispositif selon l'une ou plusieurs des revendications précédentes, **caractérisé par le fait que** les buses (7) sont disposées de manière à agir dans le sens d'un écoulement (22) dirigé vers le haut, les buses (6) de manière à agir en sens inverse d'un écoulement (22) dirigé vers le haut et les buses (17) au niveau de l'écoulement (24) dirigé vers le bas.
